## Europäisches Patentamt
## European Patent Office
## Office européen des brevets

(19)

(11) Publication number : **0 189 387**
**B1**

(12) **EUROPEAN PATENT SPECIFICATION**

(45) Date of publication of patent specification :
13.12.89

(51) Int. Cl.⁴ : **A 01 C   7/04, B 65 G  47/14**

(21) Application number : 86870005.5

(22) Date of filing : 14.01.86

(54) Apparatus for individual separation of small bodies.

(30) Priority : 16.01.85 ES 283982 U

(43) Date of publication of application :
30.07.86 Bulletin 86/31

(45) Publication of the grant of the patent :
13.12.89 Bulletin 89/50

(84) Designated contracting states :
AT BE CH DE FR GB IT LI LU NL SE

(56) References cited :
FR–A– 2 223 941
FR–A– 2 440 142
FR–A– 2 522 921
GB–A– 1 136 771
US–E–    29 393

(73) Proprietor : Gusi Zaldin, Carlos
Balmes Street 8
Viladecans (Barcelona) (ES)

Gusi Gracia, Carlos
Balmes Street 8
Viladecans (Barcelona) (ES)

(72) Inventor : Gusi Zaidin, Carlos
Balmes Street 8
Viladecans (Barcelona) (ES)
Inventor : Gusi Gracia, Carlos
Balmes Street 8
Viladecans (Barcelona) (ES)

(74) Representative : Claeys, Pierre et al
Bureau Gevers rue de Livourne 7 bte 1
B-1050 Bruxelles (BE)

## Description

This invention relates to an apparatus for individual separation of seeds, according to the statement of claim 1.

Such an apparatus is already disclosed in FR-A-2 440 142. The apparatus according to said patent application comprises a feeding vessel in shape of a loading funnel, a hopper member for receiving the grains and a chamber arranged underneath the hopper member and forming the lower end thereof. Means for blowing air in the hopper member are annularly provided between the hopper member and the chamber in order to produce a draught of air descending along the conical walls thereof to elevate grains by the center and maintain the same in suspension in the hopper member until the chamber 4 and its aperture are opened.

A machine comprising a vessel moved according an oscillating movement is disclosed in the FR-A-2 522 921. The grains passing over holes are selected by suction in the latter. The return of the vessel to its first position and a shaking movement separate the selected grains from the others.

The object of the invention consists to improve the apparatus for individual separation of seeds according to the state of the art. An apparatus according to the invention, which is of application in precision sowing machines, should allow a continuous and quick selection of seeds one by one, said seeds being each laid in each corresponding compartment of a sowing plate in a much more advantageous manner than with known means which are presently used.

According to the invention, an apparatus, as disclosed in the statement of claim 1, is provided with the features of the characterizing portion of said claim 1.

An advantageous embodiment of the apparatus according to the invention is disclosed in claim 2.

For facilitating a more detailed explanation and the understanding thereof, several drawings are enclosed, wherein a practical embodiment of the apparatus is shown, this embodiment being given by way of a non limitative example of the scope of the present invention.

In these drawings :

Fig. 1 is a side and sectional elevation view of the apparatus.

Fig. 2, 3 and 4 show details of construction which are characteristic of the apparatus in different phases of operation.

As it may be appreciated from the Figures, the described apparatus, applied to a precision sowing machine, comprises a frame mainly made of two upright stands 1 protruding from a base plate 2 which is fixed to the working table of the sowing machine above compartment plates 3 which are moved through suitable means below the apparatus.

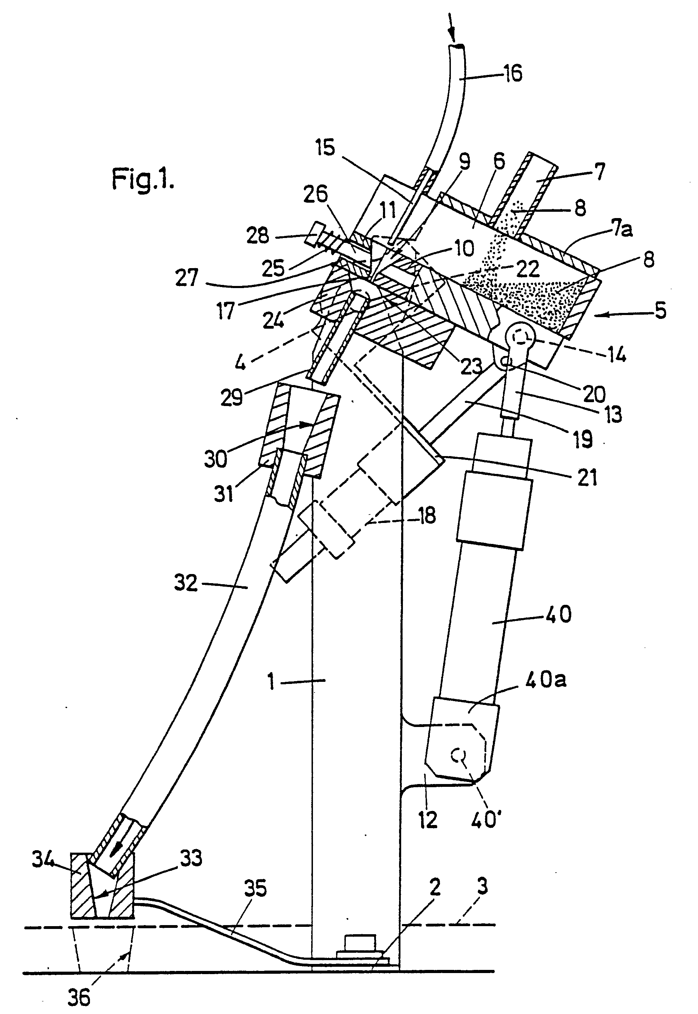

At the top end of the upright stand 1, a block-piece 5 is articulated on an axle 4, in which block-piece a rank of boxes 6 is formed ; through respective mouth-pieces of loading 7, joined to a cover 7a, seeds 8 are supplied in suitable amounts. Said block-piece 5 comprises in a forward area a rank of conical cavities 9 corresponding to the boxes 6, said cavities being formed by two semi-conical entrances 9a and 9b of corresponding plates 10 and 11 in a position wherein they are opposite and close together up to a point where they are applied one against the other (Fig. 1, 2 and 3), the plate 10 being fixed to the block-piece 5 while the plate 11 is movable with respect to the former one.

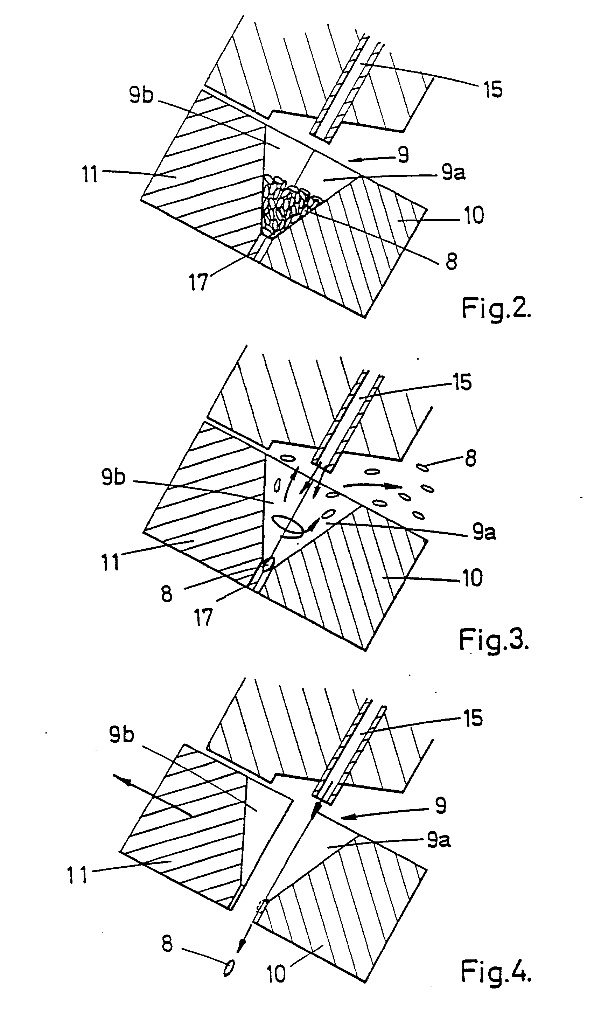

The apparatus comprises a pneumatic cylinder 40 which through a forked lower end 40a is articulated on an axle 40' provided on a lug 12 of one of the upright stands 1, while through the end of its rod 13, it is articulated on an axle 14 in an area below the block-piece 5. From a position rearwardly inclined of said block-piece illustrated by Fig. 1, the cylinder 40 causes the oscillation of the block-piece forwardly, with the result that seeds 8 of the boxes 6 fill the conical cavities 9. Thereafter, through the cylinder 40 the oscillation of the block-piece 5 occurs rearwardly (Fig. 1 and 2) and immediately through tubes 15 provided inside the block-piece 5 and ducts 16 connected to said tubes, streams of air under pressure are insufflated into the cavities 9 (Fig. 3), said streams causing all the seeds 8 to come out of said cavities, at the exception of one seed which stays obturating an aperture 17 in the bottom of the conical cavities in question.

The apparatus comprises a mechanism comprising a cylinder 18 which through the rod 19 hangs from the block-piece 5 and is articulated on the latter by means of an axle 20. Said cylinder 18 is joined to a wing 21 of a cam 22 which is hinged on the above-mentioned axle 4 on block-piece 5 ; said cylinder 18, after the single seed has been located in the aperture 17 of the bottom of conical cavities 9 as hereinabove indicated, causes the oscillation of the cam 22 so that the latter, by means of a side protrusion of the movable plate 11 pushes on this plate and separates it from the fixed plate 10, opening the lower aperture 17 of the conical cavities (Fig. 4). Then through this opening the seed passes, falling then into a corresponding hopper 23 of a rank of such hoppers provided in a piece 24 joined to the block-piece 5. The plate 11 is separated from the fixed plate 10 against the pressure of a spring 25 mounted on a rod 26 connected to the plate 10 and surrounding the plate 11, said spring bearing between the movable plate 11 and a head 28 of the rod 26 ; after the cavities 9 having been opened, the movable plate 11 returns to its original position.

The hoppers 23 comprise corresponding tubes 29 through which the respective individual seeds fall into corresponding mouths 30 provided in a sleeve 31 fixed to the upright stands 1 ; to these mouths 30 are connected other corresponding ducts 32 through which seeds are sent to lower holes 33 formed in a cross piece 34 supported by end arms 35 joined to the frame 1 below the plate 3 the compartments 36 of which coincide with the holes 33 for falling of corresponding individual seeds 8 into said compartments 36.

It is to be noted that the materials, forms and sizes of the components of the described apparatus can vary and many changes may be brought to this apparatus without departing from the scope of the present invention as defined by the claims.

## Claims

1. Apparatus for the individual separation of seeds, which is of application in precision sowing machines, comprising

a frame (1) on which is arranged a feeding vessel (6) provided with a mouth-piece (7) for supplying seeds into the feeding vessel (6),

a seed receiving member, having a conical cavity (9) able to be supplied with seeds from the feeding vessel (6) and a calibrated aperture (17) situated at the bottom of the conical cavity (9), the seed receiving member comprising two jaws (10, 11) provided with semi-conical walls (9a, 9b) which are opposite in a closed position wherein they are applied one against the other,

means (18, 21, 22) for moving apart from one another said jaws (10, 11) into an open position, wherein said seed receiving member and the corresponding aperture (17) are opened, and means (25) for returning said jaws (10, 11) to the closed position,

and means (15) for insufflating air under a predetermined pressure into said conical cavity (9), in order to repulse upwards the seeds supplied therein, and to apply one of them onto said aperture (17), in the closed position of the jaws (10, 11),

characterized in that the feeding vessel is a row of boxes (6), each of which is provided with a respective mouth-piece (7), the boxes being arranged in a block-piece (5) articulated at the top of the frame (1) and being each provided in a forward area with a seed receiving member, said seed receiving members forming a row of conical cavities (9), each of which is directly in communication with a respective box (6),

in that the apparatus comprises means (40, 13) for oscillating the block-piece (5) alternately between a position inclined rearwardly and a position inclined forwardly, in which said jaws (10, 11) are in said closed position, in order to supply the conical cavities with seeds,

in that a passage (15) is provided inside the block-piece (5) for insufflating air under pressure into each said conical cavity, in a position inclined rearwardly of the block-piece (5), in order to expel the seeds from each said cavity (9), while applying simultaneously one of the seeds onto said aperture (17), in said closed position of the jaws, and

in that each conical cavity (9) and the corresponding aperture (17) are arranged above a corresponding hopper (23) to which is connected a duct (32) provided with a lower hole (33) in order to discharge the seed into a respective compartment (36) of sowing.

2. Apparatus according to claim 1, wherein the passage (15) is provided centrally above said cavity (9) of the seed receiving member.

## Patentansprüche

1. Vorrichtung zur einzelnen Trennung von Samenkörnern zur Verwendung in Präzisionssämaschinen, umfassend

einen Rahmen (1), auf dem ein Zuführgefäß (6) angeordnet ist, das mit einem Mundstück (7) zum Einbringen von Samenkörnern in das Zuführgefäß (6) versehen ist.

ein Sammenkornaufnahmeteil mit einem konischen Hohlraum (9), der von dem Zuführgefäß (6) mit Samenkörnern beschickt werden kann, und mit einer am Boden des konischen Hohlraums (9) angeordneten kalibrierten Öffnung (17), wobei das Samenkornaufnahmeteil zwei Backen (10, 11) umfaßt, die mit halbkonischen Wänden (9a, 9b) versehen sid, die im geschlossen Zustand einander gegenüberliegen, in dem sie aneinander anliegen,

Mittel (18, 21, 22) zum Spreizen der Backen (10, 11) in eine offene Stellung, in der das Samenkornaufnahmeteil und die zugehörige Öffnung (17) geöffnet sind, und Mittel (25) zum Zurückführen der Backen (10, 11) in die geschlossene Stellung,

und Mittel (15), um in der geschlossenen Stellung der Backen (10, 11) Luft unter einem bestimmten Druck in den konischen Hohlraum (9) einzublasen, um die in diesen zugeführten Samenkörner nach oben auszustoßen und eines von ihnen auf der Öffnung (17) anzubringen,

dadurch gekennzeichnet, daß das Zuführgefäß aus einer Reihe von Kästen (6) besteht, von denen jeder mit einem zugeordneten Mundstück (7) versehen ist, wobei die Kästen in einem Blockstück (5) angeordnet sind, das an der Oberseite des Rahmens (1) angelenkt ist, und die jeweils in einem vorderen Bereich mit einem Samenkornaufnahmeteil versehen sind, wobei die Samenkornaufnahmeteile eine Reihe von konischen Hohlräumen (9) bilden, von denen jeder mit einem zugeordneten Kasten (6) in unmittelbarer Verbindung steht,

daß die Vorrichtung Mittel (40, 13) umfaßt, um das Blockstück (5) abwechselnd zwischen einer nach hinten und einer nach vorne geneigten Stellung zu verschwenken, in der sich die Backen (10, 11) in der geschlossenen Stellung befinden, um die konischen Hohlräume mit Samenkörnern zu beschicken,

daß im Inneren des Blockstücks (5) ein Kanal (15) angeordnet ist, um in einer nach hinten geneigten Stellung des Blockstücks (5) Luft unter Druck in jeden der konischen Hohlräume zu blasen, um die Samenkörner aus jedem Hohlraum (9) auszustoßen, während gleichzeitig eines der Samenkörner in der geschlossenen Stellung der Backen auf der Öffnung (17) angebracht wird, und

daß jeder konische Hohlraum (9) und die zugehörige Öffnung (17) über einem zugehörigen Trichter (23) angeordnet sind, mit dem ein Kanal (32) verbunden ist, der mit einer unteren Öffnung (33) versehen ist, um das Samenkorn in eine entsprechende Saatkammer (36) abzugeben.

2. Vorrichtung nach Anspruch 1, wobei der Kanal (15) mittig über dem Hohlraum (9) des Samenkornaufnahmeteils angeordnet ist.

## Revendications

1. Dispositif de séparation individuelle de semences, qui est d'application dans des machines à ensemencer de précision, comprenant

un châssis (1) sur lequel est agencé un récipient d'alimentation (6) pourvu d'une pièce d'embouchure (7) destinée à la fourniture des semences à l'intérieur du récipient d'alimentation (6),

un élément de réception de semences, présentant une cavité conique (9) capable d'être alimentée en semences depuis le récipient d'alimentation (6) et un orifice calibré (17) situé au fond de la cavité conique (9), l'élément de réception de semences comprenant deux mâchoires (10, 11) pourvues de parois semi-coniques (9a, 9b) qui sont opposées dans une position fermée dans laquelle elles sont appliquées l'une contre l'autre,

des moyens (18, 21, 22) pour écarter lesdites mâchoires (10, 11) l'une de l'autre dans une position ouverte, où ledit élément de réception de semences et l'orifice correspondant (17) sont ouverts, et des moyens (25) pour ramener lesdites mâchoires (10, 11) dans la position fermée,

et des moyens (15) pour insuffler de l'air sous une pression prédéterminée à l'intérieur de ladite cavité conique (9), en vue de repousser vers le haut les semences qui ont été alimentées à l'intérieur, et pour appliquer l'une d'elles sur ledit orifice (17), dans la position fermée des mâchoires (10, 11),

caractérisé en ce que le récipient d'alimentation représente une rangée de boîtiers (6), dont chacun est pourvu d'une pièce d'embouchure respective (7), tes boîtiers étant agencés dans une pièce formant bloc (5) qui est articulée au sommet du châssis (1) et étant chacun pourvus dans une zone avant d'un élément de réception de semences, ces éléments de réception de semences formant une rangée de cavités coniques (9) dont chacune est directement en communication avec un boîtier respectif (6),

en ce que le dispositif comprend des moyens (40, 13) pour faire osciller la pièce formant bloc (5) de manière alternée entre une position inclinée vers l'arrière et une position inclinée vers l'avant, dans laquelle lesdites mâchoires (10, 11) sont dans la position fermée, en vue d'alimenter en semences les cavités coniques,

en ce qu'un passage (15) est prévu à l'intérieur de la pièce formant bloc (5) pour insuffler de l'air sous pression à l'intérieur de chaque cavité conique, dans une position inclinée vers l'arrière de la pièce formant bloc (5), en vue d'expulser les semences de chaque cavité (9), tout en appliquant simultanément une des semences sur ledit orifice (17), dans la position fermée des mâchoires, et

en ce que chaque cavité conique (9) et l'orifice correspondant (17) sont agencés au-dessus d'un entonnoir correspondant (23) auquel est relié un conduit (32) pourvu d'un trou inférieur (33) en vue de décharger la semence dans un compartiment correspondant (36) d'ensemencement.

2. Dispositif suivant la revendication 1, caractérisé en ce que le passage (15) est prévu en position centrale au-dessus de ladite cavité (9) de l'élément de réception de semences.

Fig.1.

Fig.2.

Fig.3.

Fig.4.